(19) Europäisches Patentamt
European Patent Office
Office européen des brevets

(11) Veröffentlichungsnummer: **0 174 586 B1**

(12) # EUROPÄISCHE PATENTSCHRIFT

(45) Veröffentlichungstag der Patentschrift: **08.05.91**

(51) Int. Cl.$^5$: **D21H 21/28**, C09B 47/26, C09B 67/26

(21) Anmeldenummer: **85111083.3**

(22) Anmeldetag: **03.09.85**

Die Akte enthält technische Angaben, die nach dem Eingang der Anmeldung eingereicht wurden und die nicht in dieser Patentschrift enthalten sind.

(54) **Kupferphthalocyaninfarbstoffe, ihre Herstellung, ihre wässrigen Lösungen und ihre Verwendung zum Färben von Papier.**

(30) Priorität: **13.09.84 DE 3433613**

(43) Veröffentlichungstag der Anmeldung:
**19.03.86 Patentblatt 86/12**

(45) Bekanntmachung des Hinweises auf die Patenterteilung:
**08.05.91 Patentblatt 91/19**

(84) Benannte Vertragsstaaten:
**CH DE FR GB LI**

(56) Entgegenhaltungen:
**EP-A- 0 114 325**
**DE-A- 1 061 010**
**FR-A- 2 307 022**
**US-A- 4 379 710**
**DE-A- 1 049 996**
**DE-A- 1 064 661**
**GB-A- 2 089 378**

(73) Patentinhaber: **BAYER AG**
**W-5090 Leverkusen 1 Bayerwerk(DE)**

(72) Erfinder: **Groll, Manfred, Dr.**
**Paul-Klee-Strasse 68c**
**W-5090 Leverkussen(DE)**
Erfinder: **Ockelmann, Dieter, Dr.**
**Gerstenkamp 10**
**W-5000 Koeln 80(DE)**

EP 0 174 586 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind basische Kupferphthalocyaninfarbstoffe der allgemeinen Formel

$$\text{Cu-Pc-}(SO_2\overset{R_1}{\overset{|}{N}}\text{—}(\text{—}A\text{—}\overset{R_2}{\overset{|}{N}})_n\text{—}B\text{—}\overset{R_3}{\overset{|}{N}}H)_x \qquad (I)$$

in der

| | |
|---|---|
| Cu-Pc | den Rest eines x-wertigen Kupferphthalocyanins, |
| A und B | unabhängig voneinander einen Alkylen-Rest mit 2 bis 5 Kohlenstoffatomen, |
| $R_1$ und $R_3$ | unabhängig voneinander Wasserstoff oder einen gegebenenfalls durch Hydroxy, $C_1$ bis $c_3$ Alkoxy, Halogen oder eine $NH_2$-Gruppe substituierten Alkyl-Rest mit 1 bis 3 Kohlenstoffatomen, |
| $R_2$ | eine gegebenenfalls durch Hydroxy, $C_1$ bis $C_3$ Alkoxy oder Halogen substituierte Alkyl-Gruppe mit 1 bis 3 Kohlenstoffatomen, |
| n | die Zahl 1 bis 3 |
| x | den Wert 1,8 bis 2,5, |

oder falls n = 1 und A = $C_2H_4$, $R_1 + R_2$ eine Ethylen-Brücke bedeuten,
ihre wäßrigen Lösungen, ihre Herstellung und ihre Verwendung zum Färben von Papier.

Von den Farbstoffen der Formel (I) sind die Farbstoffe der Formel

$$\text{Cu-Pc}(SO_2\overset{R_1'}{\overset{|}{N}}\text{—}A\text{—}\overset{R_2'}{\overset{|}{N}}\text{—}B\text{—}NH_2)_x \qquad (II)$$

hervorzuheben,
in der

| | |
|---|---|
| Cu-Pc, | A, B und x die in Formel (I) angegebene Bedeutung haben, |
| $R_1'$ | Wasserstoff oder einen gegebenenfalls durch Hydroxy, $C_1$ bis $C_3$ Alkoxy oder Halogen substituierten Alkyl-Rest mit 1 bis 3 Kohlenstoffatomen, |
| $R_2'$ | eine gegebenenfalls durch Hydroxy, $C_1$ bis $C_3$ Alkoxy oder Halogen substituierte Alkyl-Gruppe mit 1 bis 3 Kohlenstoffatomen |

oder, falls A = Ethylen, $R_1' + R_2'$ eine Ethylenbrücke bedeuten.

Besonders bevorzugt sind Farbstoffe der Formel

$$\text{Cu-Pc-}(SO_2\text{-NH-}A'\text{-}\overset{R_2''}{\overset{|}{N}}\text{-}B'\text{-}NH_2)_x \qquad (III)$$

in der

| | |
|---|---|
| Cu-Pc | und x die in Formel (I) angegebene Bedeutung haben, |
| A' und B' | unabhängig voneinander eine Alkylen-Gruppe mit 2 oder 3 Kohlenstoffatomen und |
| $R_2''$ | eine Alkyl-Gruppe mit 1 bis 3 Kohlenstoffatomen bedeuten. |

Man erhält die Farbstoffe der Formel (I), in dem man Kupferphthalocyaninsulfonsäurechloride der Formel

$$\text{Cu-Pc-}(SO_2Cl)_x \qquad (IV)$$

mit einem Amin der Formel

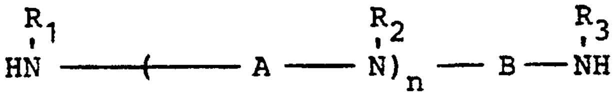 , (V)

wobei
Cu-Pc, A, B, $R_1$, $R_2$, $R_3$, n und x die oben angegebene Bedeutung haben,
gegebenenfalls unter Zusatz eines säurebindenden Mittels, in Wasser oder in einer Mischung aus Wasser und einem mit Wasser mischbaren organischen Lösungsmittel umsetzt, die erhaltenenen Farbstoffe isoliert und gegebenenfalls unter Zusatz einer in Wasser löslichen Säure in Lösung bringt.

Kupferphthalocyaninsulfonsäurechloride der Formel (IV) können die Sulfonsäurechlorid-Gruppen in den 3- oder 4-Stellungen der Benzol-Kerne tragen. Sie werden in üblicher Weise durch Behandeln von Kupferphthalocyanin oder Kupferphthalocyaninsulfonsäure mit Chlorsulfonsäure und Thionylchlorid erhalten. Zur Isolierung werden die Chlorsulfonsäure-Lösungen auf Eis gegeben, die ausgefallenen Kupferphthalocyaninsulfonsäurechloride abgesaugt und in Form wäßriger Pasten weiter verarbeitet.

Als Beispiele für Amine der Formel (V) seien genannt:
Bis-(3-aminopropyl)-methylamin, Bis-(3-aminopropyl)-ethylamin, Bis-(3-aminopropyl)-propylamin, Bis-(3-aminopropyl)-hydroxyethylamin, Bis-(2-aminoethyl)-methylamin, Bis-(2-aminoethyl)-ethylamin, Bis-(2-aminoethyl)-propylamin, N,N',N'-Trimethyl-diethylentriamin, Bis-(4-aminobutyl)-methylamin, N,N',N'',N'''-Tetramethyltripropylentetramin,N-Methyl-N-(3-aminopropyl)-N'-methyl-N'-(3-aminopropyl)-propylendiamin-1,3, N,N',N''-Trimethyl-N-(3-aminoethyl)-diethylentriamin, N-(2-Aminoethyl)-piperazin.

Als wasserlösliche Säuren zum Herstellen der Farbstoff-Lösungen eignen sich anorganische oder organische Säuren wie Salzsäure, Schwefelsäure, Phosphorsäure, Methansulfonsäure, Ethansulfonsäure, und insbesondere ein- oder mehrbasische organische Carbonsäuren wie Ameisensäure, Essigsäure, Hydroxyessigsäure, Methoxyessigsäure, Ethoxyessigsäure, Milchsäure, Äpfelsäure, Citronensäure oder deren Mischungen.

Beispiele für säurebindende Mittel der oben genannten Art sind:
Soda, Pottasche, Lithiumcarbonat, Natronlauge, Kalilauge oder Lithiumhydroxid. Besonders vorteilhaft ist es, den Umsatz in überschüssigem Amin durchzuführen.

Beim Färben oder Drucken ist es vorteilhaft, die Farbstoffe in Form ihrer Flüssigeinstellungen einzusetzen. Die erfindungsgemäß erhaltenen wäßrigen Farbstofflösungen können bis zu 30 Gew.-% Farbstoff enthalten.

Es ist bekannt, daß zum Färben von Papier mehr und mehr Farbstoffe eingesetzt werden, die eine gute chemische Bleichbarkeit haben, um auf diese Weise den Ausschuß von gefärbter Papiermasse nach einem chemischen Bleichvorgang z.B. mit Chlorlauge wieder für die Papierherstellung einsetzen zu können.

Auf Basis von Phthalocyanin-sulfonsäureamiden aufgebaute basische Phthalocyanin-Farbstoffe sind zum Beispiel in den deutschen Auslegeschriften 1 061 010, 1 064 661 und 1 049 996 beschrieben. Die mit ihnen erhaltenen Papierfärbungen sind jedoch mit Chlorlauge schlecht oder nicht bleichbar. Die aus den US-A-4379710 und 4448722 bekannten Phthalocyaninfarbstoffe weisen eine unbefriedigende Echtheit gegenüber Zitronensäure auf. Es wurde nun überraschenderweise gefunden, daß die neuen Farbstoffe der Formel (I) mit Chlorlauge gut bleichbar sind und ausgezeichnete Ausblutechtheiten, insbesondere eine ausgezeichnete Seifen- und Milchsäureechtheit haben.

Die Verwendung zum Färben von Papier erfolgt nach den herkömmlichen Verfahren. Vorzugsweise werden die Farbstoffe zum Färben von Papier in der Masse verwendet. Hierbei werden die Lösungen der Farbstoffe dem sogenannten Dünnstoff oder Dickstoff vor dem Erreichen des Stoffablaufs zugegeben.

Weiter Appliziermöglichkeiten sind folgende:
Entweder man sprüht eine Lösung des Farbstoffes auf das Papier auf oder aber man fährt das ungefärbte Papier vor Erreichen der Trockenpartie durch eine Leimpresse, in deren Trog sich die Lösung des erfindungsgemäßen Farbstoffes befindet. Das durch Besprühen oder Eintauchen gefärbte Papier wird anschließend in der Trockenpartie getrocknet.

Die Farbstoffe der Formel (I) und insbesondere der Formel (II) können auch nach US-A-4 432 900 unter Zusatz von Aldehyden oder Dialdehyden auf Papier gedruckt werden. Die Ausblutechtheiten der Farbstoffe werden hierdurch nochmals verbessert.

<u>Beispiel 1</u>

In 360 g Bis-(3-aminopropyl)-methylamin wird eine wasserfeuchte Paste von 2/10 Mol Cu-Pc-(3)-$(SO_2Cl)_{2,1}$ (erhalten durch Behandeln von 115 g Kupferphthalocyanin mit Chlorsulfonsäure und Thionylchlorid bei Temperaturen von 100-102 °C, Austragen der Schmelze auf Eis, Absaugen und Waschen der Sulfochlorid-Paste mit Wasser) eingerührt, wobei die Temperatur der Reaktionsmischung auf 50-55 °C ansteigt. Man rührt eine Stunde bei 55 °C und dann bis zur Beendigung des Umsatzes bei 65 °C, trägt das Reaktionsgemisch in 1000 Teile Wasser ein, saugt ab und wäscht das Nutschgut mit Wasser. Nach dem Trocknen erhält man 200 g des Farbstoffes der Formel

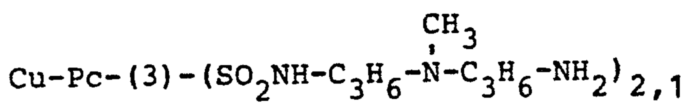 $\lambda$ max = 606 nm

der in Form seiner wasserlöslichen Salze Papier in klaren Türkistönen mit guter Bleichbarkeit färbt. Die erhaltenen Färbungen haben ausgezeichnete Echtheiten, insbesondere eine ausgezeichnete Milchsäure-Echtheit und Seifen-Echtheit.

Zur Herstellung einer Flüssigeinstellung wird der Farbstoff in einer Mischung von 400 g Wasser, 100 g Essigsäure 99 %ig, 80 g Milchsäure, 15 g Methansulfonsäure und 500 g N,N'-Dimethylharnstoff oder in einer Mischung von 900 g Wasser und 300 g Essigsäure 99 %ig gelöst.

Farbstoffe mit ähnlichen Eigenschaften werden erhalten, wenn man das in Absatz 1 genannte Amin durch Bis-(3-aminopropyl)-ethylamin, Bis-(2-aminoethyl)-methylamin oder Bis-(2-aminoethyl)-ethylamin ersetzt. Die Farbstoffe färben in Form ihrer wasserlöslichen Salze Papier in klaren Türkistönen mit guter Bleichbarkeit. Die erhaltenen Färbungen haben ausgezeichnete Ausblutechtheiten. Die maximalen Wellenlängen dieser Farbstoffe liegen zwischen 603 und 606 nm.

Beispiel 2

In 180 g N-(2-Aminoethyl)-piperazin wird bei 0 °C bis 15 °C eine wasserfeuchte Paste von 1/10 Mol Cu-Pc-(3)-$(SO_2Cl)_{2,1}$ (erhalten durch Behandeln von 57,5 g Kupferphthalocyanin mit Chlorsulfonsäure und Thionylchlorid bei Temperaturen von 100 bis 102 °C, Austragen der Schmelze auf Eis, Absaugen und Waschen der Sulfochlorid-Paste mit Wasser) eingerührt. Man steigert die Temperatur der Reaktionsmischung innerhalb einer Stunde auf 55 °C und innerhalb einer weiteren Stunde auf 65 °C, trägt das Reaktionsgemisch in 500 ml Wasser ein, saugt ab und wäscht das Nutschgut mit Wasser. Nach dem Trocknen erhält man 100 g des Farbstoffes der Formel

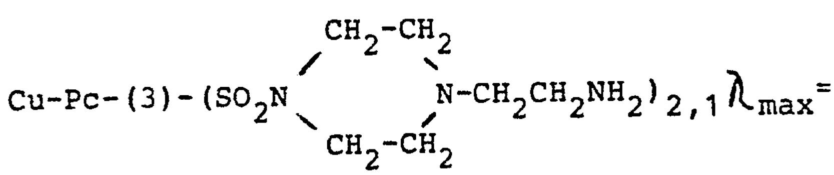 $\lambda_{max}$ = 604 nm

der in Form seiner wasserlöslichen Salze Papier in klaren Türkistönen mit guter Bleichbarkeit färbt. Die erhaltenen Färbungen haben ausgezeichnete Echtheiten, insbesondere eine ausgezeichnete Milchsäure-Echtheit und Seifen-Echtheit.

Zur Herstellung einer Flüssigeinstellung wird der Farbstoff unter Zusatz von 250 g N,N'-Dimethylharnstoff, 50 g Eisessig, 30 g Milchsäure und 50 g Zitronensäure in 250 g Wasser oder in einer Mischung von 450 g Wasser und 150 g Eisessig gelöst.

Man erhält Farbstoffe mit ähnlichen Eigenschaften, wenn man das in Absatz 1 eingesetzte N-(2-Aminoethyl)-piperazin durch N,N',N"-Trimethyl-diethylentriamin oder N-Methyl-N-(3-aminopropyl)-N'-methyl-N'-(3-aminopropyl)-propylendiamin-1,3 ersetzt. Die Farbstoffe färben in Form ihrer wasserlöslichen Salze Papier in klaren Türkistönen mit guter Bleichbarkeit. Die erhaltenen Färbungen haben sehr gute Ausblutechtheiten. Die maximalen Wellenlängen liegen zwischen 603 und 606 nm.

Beispiel 3

Ein aus 50 % gebleichtem Kiefernsulfat-Zellstoff und 50 % gebleichtem Laubholzsulfat-Zellstoff bestehender Trockenstoff wird im Holländer mit Wasser angeschlagen und bis zum Mahlgrad 30 SR gemahlen, so daß der Trockengehalt etwas über 2,5 % liegt, und anschließend mit Wasser auf exakt 2,5 % Trockengehalt des Dickstoffes eingestellt.

200 Teile des Dickstoffes werden mit 5 Teilen einer schwach essigsauren 1,5 %igen wäßrigen Lösung des Farbstoffs aus Beispiel 16, Absatz 1 versetzt und ca. 5 Minuten verrührt. Man verdünnt dann die Masse mit etwa 500 Teilen Wasser und stellt hieraus in üblicher Weise durch Absaugen über einen Blattbildner Papierblätter her. Die Papierblätter weisen eine kräftige türkisblaue Färbung auf.

Verwendet man anstelle der oben genannten Farbstofflösung schwach essigsaure oder schwach ameisensaure 1-2 %ige Farbstofflösungen der anderen Farbstoffe, die in Beispiel 1 beschrieben sind, so erhält man ebenfalls Papierblätter von kräftig türkisblauer Färbung.

Beispiel 4

Zu 200 g eines 2,5 %igen Papierbreis, bestehend aus 50 % gebleichten Kiefernsulfat und 50 % gebleichtem Birkensulfat mit einem Mahlgrad von SR 35° werden 0,5 g der Farbstoff-Flüssigeinstellung gemäß Beispiel 1, unter Rühren zugegeben. Anschließend wird mit 10 g einer 1 %igen Harzleim-Lösung und 20 g einer 1 %igen Aluminiumsulfatlösung geleimt und mit 500 g Wasser verdünnt. Nach 15-minütigem Rühren wird der gefärbte Papierbrei auf einen Blattbildner mit Filterpapierunterlage gegossen und abgesaugt. Das Papierblatt wird zwischen zwei Filterpapierblättern und gleichgroßen Filzen in einer Presse abgegautscht und danach auf einem Heißzylinder bei 100° C ca. 5 Minuten getrocknet. Man erhält ein brillant türkis gefärbtes Papier.

Wenn das auf diese Weise gefärbte Papier in Wasser aufschlägt und die erhaltene Suspension mit 1 % aktivem Chlor (bezogen auf Papierstoff) bei pH 7 bis 2 behandelt, erhält man eine nur noch schwach getönte Papiermasse zurück.

In analoger Weise lassen sich die anderen in Beispiel 1 beschriebenen Farbstoffe färben.

Beispiel 5

In einer Leimpressenlösung bestehend auf 50 g nicht ionogener Stärke und 20 g Leimungsmittel (ABS-Polymer) verrührt man 10 g der nach Beispiel 1 erhaltenen Farbstoff-Flüssigeinstellung und färbt die Rohpapiere oder schwach geleimten Papier bei einer Durchgangsgeschwindigkeig von ca. 5 bis 7 m/min bei 20° C und einem Aufdruck von ca. 25 % (Labor-Foulard Typ, Fa. W. Mathis, Niderhasli, Schweiz). Man erhält gleichmäßig brillant türkis gefärbte Papiere, die sich mit Hilfe von Chlorlauge gut bleichen lassen.

In analoger Weise lassen sich die anderen in Beispiel 1 beschriebenen Farbstoffe färben. Man erhält jeweils brillant und türkis gefärbte Papiere mit guter Bleichbarkeit und ausgezeichneten Echtheiten.

## Ansprüche

1. Basische Kupferphthalocyaninfarbstoffe der allgemeinen Formel

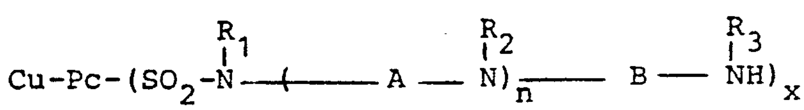

in der

| | |
|---|---|
| Cu-Pc | den Rest eines x-wertigen Kupferphthalocyanins, |
| A und B | unabhängig voneiander einen Alkylen-Rest mit 2 bis 5 Kohlenstoffatomen, |
| $R_1$ und $R_3$ | unabhängig voneinander Wasserstoff oder einen gegebenenfalls durch Hydroxy, $C_1$ bis $C_3$ Alkoxy, Halogen oder eine $NH_2$-Gruppe substituierten Alkyl-Rest mit 1 bis 3 Kohlenstoffatomen, |

| | |
|---|---|
| $R_2$ | eine gegebenenfalls durch Hydroxy, $C_1$ bis $C_3$ Alkoxy oder Halogen substituierte Alkyl-Gruppe mit 1 bis 3 Kohlenstoffatomen, |
| n | die Zahl 1 bis 3, |
| x | den Wert 1,8 bis 2,5, |
| | oder falls n = 1 und A = $C_2H_4$, $R_1$ + $R_2$ eine Ethylen-Brücke bedeuten. |

**2.** Basische Kupferphthalocyaninfarbstoffe gemäß Anspruch 1 der allgemeinen Formel

$$\text{Cu-Pc-}(\text{SO}_2\overset{\overset{R_1'}{|}}{\text{N}}\text{———A———}\overset{\overset{R_2'}{|}}{\text{N}}\text{———B———NH}_2)_x$$

in der

| | |
|---|---|
| Cu-Pc, A, B und x | die in Anspruch 1 angegebene Bedeutung haben, |
| $R_1'$ | Wasserstoff oder einen gegebenenfalls durch Hydroxy, $C_1$ bis $C_3$ Alkoxy oder Halogen substituierten Alkyl-Rest mit 1 bis 3 Kohlenstoffatomen, |
| $R_2'$ | eine gegebenenfalls durch Hydroxy, $C_1$ bis $C_3$ Alkoxy oder Halogen substituierte Alkyl-Gruppe mit 1 bis 3 Kohlenstoffatomen, |
| | oder, falls A = Ethylen, $R_1'$ + $R_2'$ eine Ethylenbrücke bedeuten. |

**3.** Basische Kupferphthalocyaninfarbstoffe gemäß Anspruch 1 der allgemeinen Formel

$$\text{Cu-Pc-}(\text{SO}_2\text{-NH———A'———}\overset{\overset{R_2''}{|}}{\text{N}}\text{———B'———NH}_2)_x$$

in der

| | |
|---|---|
| Cu-Pc und x | die in Anspruch 1 angegebene Bedeutung hat, |
| A' und B' | unabhängig voneinander eine Alkylen-Gruppe mit 2 oder 3 Kohlenstoffatomen und |
| $R_2''$ | eine Alkyl-Gruppe mit 1 bis 3 Kohlenstoffatomen bedeuten. |

**4.** Basischer Kupferphthalocyaninfarbstoff der Formel

$$\text{Cu-Pc-(3)-}(\text{SO}_2\text{-NH-C}_3\text{H}_6\text{-}\overset{\overset{CH_3}{|}}{\text{N}}\text{-C}_3\text{H}_6\text{-NH}_2)_x$$

$$x = 1{,}8\text{-}2{,}5$$

**5.** Basischer Kupferphthalocyaninfarbstoff der Formel

$$\text{Cu-Pc-(3)-}(\text{SO}_2\text{-NH-C}_2\text{H}_4\text{-}\overset{\overset{CH_3}{|}}{\text{N}}\text{-C}_2\text{H}_4\text{-NH}_2)_x$$

$$x = 1{,}8\text{-}2{,}5$$

**6.** Verfahren zur Herstellung von kationischen Kupferphthalocyaninfarbstoffen des Anspruchs 1, dadurch gekennzeichnet, daß man Sulfonsäurechloride der allgemeinen Formel

$Cu\text{-}Pc\text{-}(SO_2Cl)_x$

mit Überschüssigem Amin der Formel

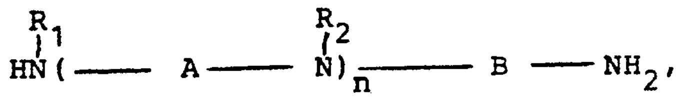

wobei

Cu-Pc, A, B, $R_1$, $R_2$, n und x die in Anspruch 1 angegebene Bedeutung haben, umsetzt und den Farbstoff isoliert.

7. Verwendung der kationischen Kupferphthalocyaninfarbstoffe des Anspruchs 1 zum Färben und Bedrukken von Papier.

8. Wäßrige Lösungen, die einen Farbstoff des Anspruchs 1 enthalten, der in Form eines wasserlöslichen Salzes vorliegt.

## Claims

1. Basic copper-phthalocyanine dyestuffs of the general formula

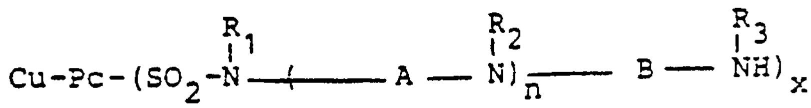

in which
Cu-Pc denotes the radical of an x-valent copper-phthalocyanine,
A and B independently of each other denote an alkylene radical having 2 to 5 carbon atoms,
$R_1$ and $R_3$ independently of each other denote hydrogen or an alkyl radical having 1 to 3 carbon atoms which is optionally substituted by hydroxyl,
$C_1$- to $C_3$-alkoxy, halogen or an $NH_2$ group,
$R_2$ denotes an alkyl group having 1 to 3 carbon atoms which is optionally substituted by hydroxyl,
$C_1$- to $C_3$-alkoxy or halogen,
n denotes the number 1 to 3,
x denotes the value 1.8 to 2.5,
or if n = 1 and A = $C_2H_4$, $R_1 + R_2$ denotes an ethylene bridge.

2. Basic copper-phthalocyanine dyestuffs according to Claim 1 of the general formula

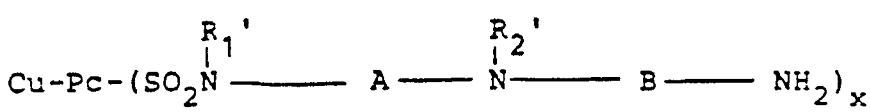

in which
Cu-Pc, A, B and x have the meaning indicated in Claim 1,
$R_1'$ denotes hydrogen or an alkyl radical having 1 to 3 carbon atoms which is optionally substituted by hydroxyl, $C_1$- to $C_3$-alkoxy or halogen,
$R_2'$ denotes an alkyl group having 1 to 3 carbon atoms which is optionally substituted by hydroxyl,
$C_1$- to $C_3$-alkoxy or halogen,
or if A = ethylene, $R_1' + R_2'$ denotes an ethylene bridge.

3. Basic copper-phthalocyanine dyestuffs according to Claim 1 of the general formula

$$Cu\text{-}Pc\text{-}(SO_2\text{-}NH — A' — \overset{\displaystyle R_2''}{\overset{|}{N}} — B' — NH_2)_x$$

in which
Cu-Pc and x have the meaning indicated in Claim 1, A' and B' independently of each other denote an alkylene group having 2 or 3 carbon atoms and $R_2''$ denotes an alkyl group having 1 to 3 carbon atoms.

4. Basic copper-phthalocyanine dyestuff of the formula

$$Cu\text{-}Pc\text{-}(3)\text{-}(SO_2\text{-}NH\text{-}C_3H_6\text{-}\overset{\displaystyle CH_3}{\overset{|}{N}}\text{-}C_3H_6\text{-}NH_2)_x$$

$$x = 1.8 - 2.5.$$

5. Basic copper-phthalocyanine dyestuff of the formula

$$Cu\text{-}Pc\text{-}(3)\text{-}(SO_2\text{-}NH\text{-}C_2H_4\text{-}\overset{\displaystyle CH_3}{\overset{|}{N}}\text{-}C_2H_4\text{-}NH_2)_x$$

$$x = 1.8 - 2.5.$$

6. Process for preparing cationic copper-phthalocyanine dyestuffs of Claim 1, characterised in that sulphonyl chlorides of the general formula
$Cu\text{-}Pc\text{-}(SO_2Cl)_x$
are reacted with excess amine of the formula

$$H\overset{\displaystyle R_1}{\overset{|}{N}}( — A — \overset{\displaystyle R_2}{\overset{|}{N}})_n — B — NH_2,$$

where
Cu-Pc, A, B, $R_1$, $R_2$, n and x have the meaning indicated in Claim 1,
and the dyestuff is isolated.

7. Use of the cationic copper-phthalocyanine dyestuffs of Claim 1 for dyeing and printing paper.

8. Aqueous solutions which contain a dyestuff of Claim 1 which is present in the form of a water-soluble salt.

## Revendications

1. Colorants basiques de phtalocyanine de cuivre de formule générale

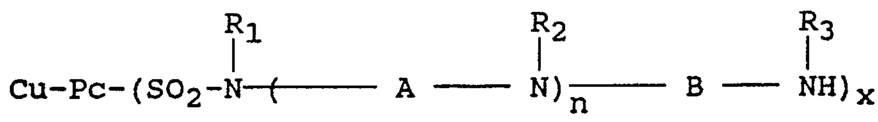

dans laquelle

- Cu-Pc : est le reste d'une phtalocyanine de cuivre de valence x,
- A et B : représentent, indépendamment l'un de l'autre, un reste alkylène de 2 à 5 atomes de carbone,
- $R_1$ et $R_3$ : représentent, indépendamment l'un de l'autre, l'hydrogène ou un reste alkyle de 1 à 3 atomes de carbone éventuellement substitué par un radical hydroxy, alkoxy en $C_1$ à $C_3$, halogéno ou par un groupe $NH_2$,
- $R_2$ : est un groupe alkyle en $C_1$ à $C_3$ éventuellement substitué par un radical hydroxy, alkoxy en $C_1$ à $C_3$ ou halogéno,
- n : représente les nombres de 1 à 3,
- x : a une valeur de 1,8 à 2,5,

ou bien, au cas où n est égal à 1 et A est un groupe $C_2H_4$, la somme de $R_1$ et $R_2$ représente un pont éthylène.

**2.** Colorants basiques de phtalocyanine de cuivre suivant la revendication 1, de formule générale

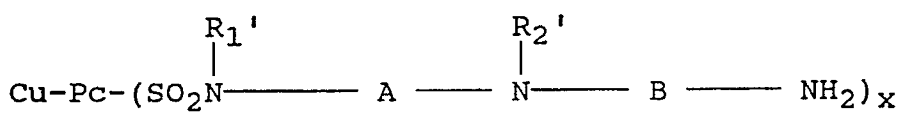

dans laquelle

- Cu-Pc, A, B et x : ont la définition indiquée dans la revendication 1,
- $R_1'$ : est l'hydrogène ou un reste alkyle en $C_1$ à $C_3$ éventuellement substitué par un radical hydroxy, alkoxy en $C_1$ à $C_3$ ou halogéno,
- $R_2'$ : est un groupe alkyle en $C_1$ à $C_3$ éventuellement substitué par un radical hydroxy, alkoxy en $C_1$ à $C_3$ ou halogéno,

ou bien, lorsque A est un groupe éthylène, $R_1'$ et $R_2'$ désignent un pont éthylène.

**3.** Colorants basiques de phtalocyanine de cuivre suivant la revendication 1, de formule générale

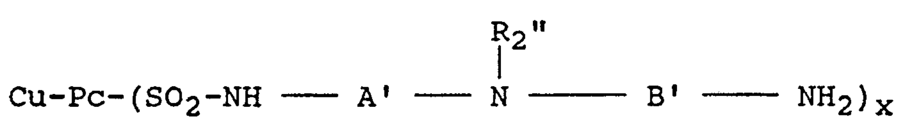

dans laquelle

- Cu-Pc et x : ont la définition indiquée dans la revendication 1,
- A' et B' : représentent, indépendamment l'un de l'autre, un groupe alkylène ayant 2 ou 3 atomes de carbone et
- $R_2''$ : est un groupe alkyle de 1 à 3 atomes de carbone.

**4.** Colorant basique de phtalocyanine de cuivre de formule

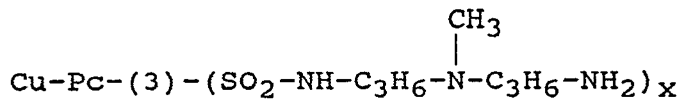

$x = 1,8-2,5$

5. Colorant basique de phtalocyanine de cuivre de formule

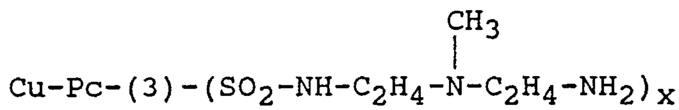

$x = 1,8-2,5$

6. Procédé de production de colorants cationiques de phtalocyanine de cuivre suivant la revendication 1, caractérisé en ce qu'on fait réagir des chlorures d'acide sulfonique de formule générale
$Cu\text{-}Pc\text{-}(SO_2Cl)_x$
avec une amine en excès de formule

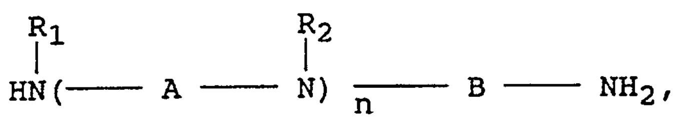

dans laquelle
Cu-Pc, A, B, $R_1$, $R_2$, n et x ont la définition indiquée dans la revendication 1,
et on isole le colorant.

7. Utilisation des colorants cationiques de phtalocyanine de cuivre suivant la revendication 1 pour la teinture et l'impression de papier.

8. Solutions aqueuses qui contiennent un colorant suivant la revendication 1 présent sous la forme d'un sel soluble dans l'eau.